# EUROPEAN PATENT APPLICATION

(11) **EP 3 342 750 A1**
(43) Date of publication of application: **04.07.2018**
(21) Application number: 17208014.5
(22) Date of filing: 18.12.2017
(51) Int. Cl.: C01B 15/023

(54) **AROMATIC SOLVENT FOR HYDROGEN PEROXIDE PRODUCTION**

(30) Priority: 29.12.2016 SE 1651754
(71) Applicant: EB Nuberg AB, 424 57 Gunnilse (SE)
(72) Inventor: BENGTSSON, Erik, 424 57 Gunnilse (SE)
(74) Representative: Kransell & Wennborg KB

(57) **Abstract**

The present disclosure relates to the use of an aromatic solvent for solving quinone in a working solution for hydrogen peroxide production in accordance with the anthraquinone process. The aromatic solvent has a flashpoint of at least 66°C and a specific gravity of at most 0.95.

## Description

### TECHNICAL FIELD

The present disclosure relates to the production of hydrogen peroxide according to the anthraquinone method, especially to an organic solvent for the working solution of the anthraquinone method.

### BACKGROUND

The anthraquinone method for hydrogen peroxide production is well known and described extensively in the literature, for example in Kirk-Othmer "Encyclopedia of Chemical Technology", 4th edition, 1993, Vol.13, pp 961-995.

In the anthraquinone process, alkylated anthraquinones and/or alkylated tetrahydroanthraquinones are typically dissolved in a combination of two different types of solvents, forming the working solution, of which one should be capable of dissolving high amounts of quinones and the other one should be capable of dissolving high amounts of hydroquinones.

In one of the original anthraquinone process patents by Riedl and Pfleiderer from 1939 (US 2,158,525), benzene (flash-point, Fl.p., -11°C) and anisol were used as quinone solvents. These solvents have a low flash point and there were several fires in the plants because of this. The very first anthraquinone plant in Germany burnt down and lives were lost. This was one of the reasons other aromatic solvents have been suggested in later patent literature, like trimethylbenzene (Fl.p. 48°C), Isoduren (Fl.p. 63°C) and so called Aromatic 150 solvents which are aromatic naphtha distillates with flash point ∼ 150°F (Fl.p. min 63°C). Most hydrogen peroxide producers avoid to run the process above the flash point in order to reduce the risk of fire.

### SUMMARY

The inventors have now found that it is advantageous to use Aromatic 175 solvents as a quinone solvent, because the physical properties are favourable and quite similar to Aromatic 150 solvents, but the flash point is ∼ 175°F = 79°C. The process can then be operated at a higher temperature without increasing the risk of fire in the plant, providing the hydroquinone solvent also has a high flash point. At an increased temperature, the solubility of quinones and hydroquinones increase and the reaction rates also increase, so the plant productivity may increase substantially, without any increased risk of fire.

Further, in order to allow easy separation from water, the quinone solvent should preferably have a density which is lower than that of water.

The present invention thus relates to the use of an aromatic solvent with a flashpoint higher than 66°C and with a specific gravity less than 0.95 as a quinone solvent in the anthraquinone method for making hydrogen peroxide.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure and from the attached dependent claims.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/ components and not to impart any order or hierarchy to the features/components.

### DETAILED DESCRIPTION

Some embodiments will now be described more fully hereinafter. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

Many oil companies produce Aromatic 150, since such solvents are not classified as flammable because the flashpoint is >60°C and therefor have less strict rules and regulations for handling and transport, but only few companies produce Aromatic 175.

The inventors have also found a few pure aromatic substances with high flash point and favourable physical properties, like tri-isopropyl benzene (TIPB), Fl.p. 81°C, that alternatively may be used as a quinone solvent giving the same benefits, but the price for pure substances are typically higher than for the naphta distillates.

In one patent application by Solvay (EP2010/054011), the quinones are not dissolved in solvents, but are instead used in pure melted form. The same advantages as in our invention are then achieved, but there are also some important disadvantages compared to our invention like:
- The quinones solidify if the temperature decreases to room temperature, for example at a plant stop.
- The density difference between the melted quinones and water is too small to allow for convenient extraction of hydrogen peroxide from the melted quinones.
- The melting points of the quinones must be less than 100 °C to allow for convenient water extraction, which excludes the most common and low cost ethyl anthraquinone, EAQ.
- There will be a risk of explosion in the oxidizer unless water in sufficient quantity is added to the oxidizer.
- The concentration of the hydrogen peroxide solution received is too low to economically concentrate to the standard market concentration of 50%. Therefor the product is basically limited to on-site consumption, like for so called HPPO plants.

Table 1 compares some physical properties of the naphta distillates Aromatic 150 (reference, too low flash-point), Aromatic 175 (in accordance with the invention and Aromatic 200 (reference, too high density/ specific gravity), and TIPB.

**Table 1: Physical properties of different aromatic solvents**

| SOLVENT | Viscosity, mPas (20 °C) | Density, g/mL (20 °C) | Fl.p., °C | Solubility of EAQ, g/L(20°C) | Solubility of EAQ, g/ L (50 °C) |
|---|---|---|---|---|---|
| Aromatic 150 | 1.2 | 0.890 | 63 | 200 | 455 |
| Aromatic 175 | 1.7 | 0.905 | 79 | 205 | 400 |
| Aromatic 200 | 3 | 0.980 | 110 | | |
| TIPB | 3.8 | 0.854 | 81 | | |

### Comments to Table 1:

Aromatic 150 is shown as a reference because it is the standard quinone solvent, used by most hydrogen peroxide producers. This solvent is produced by most oil companies. The trade mark of Shell Company is Shellsol 150. Trade mark of ExxonMobile is Solvesso 150.

Aromatic 175 is the preferred quinone solvent of the invention. The tested samples of Aromatic 175 are from Kandla Energy&Chemicals Ltd, India and from ABC Petrochem Pvt Ltd, India.

Aromatic 200 is shown for comparison. This solvent is produced by most oil companies, but is not suitable as a quinone solvent because the density is too high, why convenient extraction with water is not possible.

TIPB (tri-isopropyl benzene) is a preferred quinone solvent of the invention. It has excellent physical properties but is more expensive then Aromatic 175. TIPB may be used as the sole quinone solvent or as a mixture with Aromatic 175, to reduce the density of the mixture.

### Examples

The examples are meant to illustrate the invention, but not to limit the invention to these examples.

### Example 1 (reference)

This example is illustrating the general practice in prior art, using Aromatic 150 as a quinone solvent.

A so called mature working solution (WS) from a running full scale hydrogen peroxide plant was used. The working solution consisted of a mixture of ethyl anthraquinone, 60 grams per litre (gpl), and tetra-hydro ethyl anthraquinone, 100 gpl, dissolved in a solvent mixture composed by Solvesso 150 (i.e. Aromatic 150 quinone solvent), 75 parts, tetrabutylurea (as hydroquinone solvent), 23 parts, and tri-octyl phosphate (as hydroquinone solvent),2 parts.

The reason the working solution is called "mature" is that part of the ethyl anthraquinone that was originally added to the working solution has transferred over time in the plant to tetra-hydro ethyl anthraquinone. Tetra-hydro quinones hydrogenate at a faster rate than anthraquinones and are more soluble.

One litre of this working solution was hydrogenated in a lab hydrogenation reactor with hollow shaft agitator and 4 grams palladium (Pd) catalyst from BASF at 62°C, which is below the flashpoint, and near atmospheric pressure.

The hydrogenation reaction was stopped after 45 minutes when 6.9 normal litres of hydrogen had been consumed.

The hydrogenated working solution was filtered out from the reactor and the degree of hydrogenation was analysed by KMₙO₄ titration of a water extract from an oxidized sample. The degree of hydrogenation was 10.2 grams H₂O₂ per litre working solution.

The hydrogenated working solution was oxidized with oxygen in a lab oxidation reactor with hollow shaft agitator at 60°C. The WS turned from black to yellow after 15 minutes, indicating that the oxidation of the hydroquinones was complete.

The WS was extracted with deionized water three times to wash out the hydrogen peroxide and dried with vacuum, to make the WS ready for another round in the process.

### Example 2 (of the invention)

This example is illustrating the use of the invented technology, using Aromatic 175 or other high flash solvents as a quinone solvent.

The working solution was prepared by dissolving 400 gpl Amyl anthraquinone, AAQ, in a solvent mixture composed by Aromatic 175 with flashpoint 79°C from ABC Petrochem Pvt Ltd, India (quinone solvent), 50 parts, and Tetrabutylurea (hydroquinone solvent), 50 parts.

One litre of this working solution was hydrogenated in the same lab hydrogenation reactor as in Example 1, with hollow shaft agitator and 4 grams Pd catalyst from BASF at 75°C which is below the flashpoint and near atmospheric pressure. The hydrogenation reaction was stopped after 60 minutes when 14.5 normal litres of hydrogen had been consumed.

The hydrogenated working solution was filtered out from the reactor and the degree of hydrogenation was analysed by KMₙO₄ titration of a water extract from an oxidized sample. The degree of hydrogenation was 20.9 gram H₂O₂ per litre working solution.

The conclusion is that the rate of hydrogenation is higher in this example than in Example 1, despite anthraquinone having been hydrogenated in this example and tetra-hydro anthraquinone was hydrogenated in Example 1, which should be more easy to hydrogenate.

No hydroquinone crystals were observed in the filtered sample even after cooling it to 50°C and seeding with 1 gram Amyl anthraquinone crystals to try to provoke crystallization.

A conclusion is that Solubility of hydroquinone in Tetrabutylurea is very good at the higher temperature, which is made possible by the use of Aromatic 175.

The hydrogenated working solution was oxidized with oxygen in a lab oxidation reactor with hollow shaft agitator at 60°C. The WS turned from black to yellow after 12 minutes, indicating that the oxidation of the hydroquinones was complete.

Hydrogenated anthraquinone has a higher rate of oxidation than hydrogenated tetra-hydro anthraquinone in Example 1.

The WS was extracted with deionized water three times to wash out the hydrogen peroxide and dried with vacuum, to make the WS ready for another round in the process.

According to an aspect of the present invention there is provided a use of an aromatic solvent for solving quinone in a working solution for hydrogen peroxide production in accordance with the anthraquinone process. The aromatic solvent has a flashpoint of at least 66°C and a specific gravity of at most 0.95.

According to another aspect of the present invention, there is provided a working solution for hydrogen peroxide production in accordance with the anthraquinone process. The working solution comprising an aromatic solvent solving quinone, wherein the aromatic solvent has a flashpoint of at least 66°C and a specific gravity of at most 0.95.

In some embodiments, the solvent is a naphta distillate, e.g. a naphta distillate having a flashpoint of about 175°F (about 79°C), so called Aromatic 175. In some embodiments, the solvent has a flashpoint within the range of 70-110°C, e.g. 75-100°C or 75-90°C. A high flashpoint is good to reduce the risk of fire, but a too high flashpoint may be associated with a too high density or specific gravity. The density should be less than water, i.e. with a specific gravity of less than 1, e.g. at most 0.95. In some embodiments, the solvent has a viscosity at 20°C of at most 4 mPas, e.g. within the range of 1.5-2.5 mPas.

In some embodiments, the solvent is tri-isopropyl benzene.

The quinone solvent of the present invention is typically not used by itself in the working solution, since it may not be a good solvent for hydroquinones. Instead, it is typically used in combination with a more polar solvent, such as tetrabutylurea.

In some embodiments, the solvent is used in a concentration of at least 10%, e.g. at least 20, 30, 40 or 50%, by volume in the working solution.

In some embodiments, the solvent is used in combination with tetrabutylurea in the working solution. Tetrabutylurea is a suitable solvent for solving hydroquinone and also has a suitably high flashpoint.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. Use of an aromatic solvent for solving quinone in a working solution for hydrogen peroxide production, wherein the aromatic solvent has a flashpoint of at least 70°C and a specific gravity of at most 0.95, wherein the solvent is a naphta distillate or tri-isopropyl benzene.

2. The use of claim 1, wherein the solvent is a naphta distillate, e.g. a naphta distillate having a flashpoint of about 175°F (about 79°C).

3. The use of any preceding claim, wherein the solvent has a flashpoint within the range of 70-110°C, e.g. 75-100°C or 75-90°C.

4. The use of any preceding claim, wherein the solvent has a density at 20°C of at most 0.95 g/mL.

5. The use of any preceding claim, wherein the solvent has a viscosity at 20°C of at most 4 mPas, e.g. within the range of 1.5-2.5 mPas.

6. The use of claim 1, wherein the solvent is tri-isopropyl benzene.

7. The use of any preceding claim, wherein the solvent is used in a concentration of at least 10 %, e.g. at least 20, 30, 40 or 50 %, by volume in the working solution.

8. The use of any preceding claim, wherein the solvent is used in combination with tetrabutylurea in the working solution.

9. A working solution comprising an aromatic solvent solving quinone, wherein the aromatic solvent has a flashpoint of at least 70°C and a specific gravity of at most 0.95, wherein the solvent is a naphta distillate or tri-isopropyl benzene.
